# EUROPÄISCHE PATENTSCHRIFT

(11) **EP 1 299 281 B1**
(45) Veröffentlichungstag und Bekanntmachung des Hinweises auf die Patenterteilung: **02.01.2008**
(21) Anmeldenummer: 01956304.8
(22) Anmeldetag: 10.07.2001
(51) Int. Cl.: B62D 65/00, B65G 35/06, B65G 37/00, B65G 43/00

(54) **TRANSPORT- UND POSITIONIERVORRICHTUNG FÜR TRAGRAHMEN BZW. SKIDS**
TRANSPORT AND POSITIONING DEVICE FOR CONVEYER FRAMES OR RUNNERS
DISPOSITIF DE TRANSPORT ET DE POSITIONNEMENT POUR CADRES PORTEURS OU PLATES-FORMES

(30) Priorität: 12.07.2000 DE 20012052 U
(43) Veröffentlichungstag der Anmeldung: 09.04.2003
(73) Patentinhaber: SIEMENS AKTIENGESELLSCHAFT, 80333 München (DE)
(72) Erfinder: GOEBEL, Hans-Hermann, 38159 Vechelde (DE); ZIERAU, Ulrich, 38444 Wolfsburg (DE)
(86) Internationale Anmeldenummer: PCT/DE2001/002579
(87) Internationale Veröffentlichungsnummer: WO 2002/004279

(56) Entgegenhaltungen:
- EP-A- 0 449 706
- WO-A-89/00524
- WO-A-99/20550
- DE-A- 3 147 784
- DE-A- 4 115 327
- FR-A- 2 419 889
- GB-A- 2 078 186
- US-A- 3 931 882
- US-A- 5 577 593

## Beschreibung

Die Erfindung bezieht sich auf eine Transport- und Positioniervorrichtung nach dem Oberbegriff des Patentanspruchs 1.

Nach der Montage einer derartigen Transport- und Positioniervorrichtung an einer Fertigungsstraße muss häufig eine aufwendige Inbetriebnahme erfolgen, die zeitaufwendig ist und in deren Verlauf die korrekte Funktion der Transport- und Positioniervorrichtung an der Fertigungsstraße sichergestellt werden muss.

Aus der US 3.931.882 A ist eine gattungsgemässe Transport- und Positioniervorrichtung für Tragrahmen bzw. Skids bekannt, die dazu dient, einen Tragrahmen od.dgl. durch aufeinander folgende Fertigungsabschnitte einer Fertigungsstraße zu transportieren, wobei in den einzelnen Fertigungsabschnitten darüber hinaus an den jeweils zu realisierenden Bearbeitungsvorgang angepasste Positioniervorgänge durchzuführen sind. Die Transport- und Positioniervorrichtung ist hinsichtlich ihrer Ausgestaltung und Zusammensetzung so aufgeteilt, dass einzelne Module der Transport- und Positioniervorrichtung jeweils einem Fertigungsabschnitt der Straße zugeordnet sind, wobei eine Transportantriebseinheit ein Horizontaltransportmittel des jeweiligen Fertigungsabschnitts und eine Hubantriebseinheit ein Vertikaltransportmittel des jeweiligen Fertigungsabschnitts antreibt. Auch die Transportantriebseinheit und die Hubantriebseinheit können modulartig ausgebildet sein.

Ausgehend von dem vorstehend geschilderten Stand der Technik liegt der Erfindung die Aufgabe zugrunde, die Inbetriebnahmephase derartiger Transport- und Positioniervorrichtungen erheblich zu verkürzen, wobei darüber hinaus deren Montage und Einrichtung sowie deren Reparatur erheblich vereinfacht sein soll.

Diese Aufgabe wird erfindungsgemäß dadurch gelöst, dass die Transport- und Positioniervorrichtung eine Bedien- und Steuereinheit, mittels der die Transportantriebseinheit und die Hubantriebseinheit steuerbar sind und die als Modul ausgebildet ist, und eine Einspeisung aufweist, mittels der die Transportantriebseinheit, die Hubantriebseinheit und die Bedien- und Steuereinheit mit elektrischer Energie versorgbar sind und die als Modul ausgebildet ist. Durch die Einbeziehung der Bedien- und Steuereinheit sowie der Einspeisung in die modulartige Ausgestaltung ist sichergestellt, dass zum einen aufwendige steuerungs- und regeltechnische Maßnahmen zwecks Berücksichtigung bzw. Einbeziehung eines mit der anmeldungsgemäßen Transport- und Positioniervorrichtung versehenen Fertigungsabschnitts in eine Steuer- und Regelvorrichtung der Fertigungsstraße entfallen können, wobei darüber hinaus der Ersatz bzw. der Umbau eines Fertigungsabschnitts mit einem wesentlich geringeren Aufwand realisierbar ist.

Der Bedien- und Steuereinheit eines für manuelle Tätigkeiten ausgerüsteten Fertigungsabschnitts kann vorteilhaft eine Sicherheitseinrichtung zugeordnet sein, mittels der die Transportantriebseinheit und/oder die Hubantriebseinheit außer Betrieb setzbar sind. Zur Sicherheitseinrichtung gehören zweckmäßigerweise Sicherheitsscanner (PLS), mittels denen in manuellen Arbeitsbereichen am bzw. neben dem Fertigungsabschnitt jeweils ein Schutzfeld schaff- bzw. überwachbar ist.

Die mittels der Sicherheitsscanner schaff- und überwachbaren Schutzfelder können vorteilhaft variabel gestaltbar sein.

Zur Steuerung und Überwachung der Horizontalbewegungen des Tragrahmens bzw. Skids innerhalb des Fertigungsabschnitts weist die Bedien- und Steuereinheit zweckmäßigerweise eine Horizontalpositionssensoreinrichtung auf, mittels der die Horizontalposition eines Tragrahmens bzw. Skids an einem Fertigungsabschnitt der Fertigungsstraße erfassbar ist.

Hierzu gehört vorteilhaft ein erster Horizontalpositionssensor, der nahe der Eingangsseite des Fertigungsabschnitts angeordnet und mittels dem erfass- und an die Bedien- und Steuereinheit meldbar ist, dass das Horizontaltransportmittel, vorzugsweise eine Rollenbahn, des Fertigungsabschnitts durch einen Tragrahmen bzw. Skid belegt ist.

Ein zweiter Horizontalpositionssensor ist zweckmäßigerweise nahe der Ausgangsseite des Fertigungsabschnitts angeordnet, wobei mittels dieses zweiten Horizontalpositionssensors erfass- und an die Bedien- und Steuereinheit meldbar ist, dass sich die Vorderseite des Tragrahmens bzw. Skids der Ausgangsseite des Fertigungsabschnitts nähert, so dass das Horizontaltransportmittel des Fertigungsabschnitts mittels der Bedien- und Steuereinheit aus einem Schnell- in einen Langsambetrieb umschaltbar ist.

Ein dritter Horizontalpositionssensor ist vorteilhaft an der Ausgangsseite des Fertigungsabschnitts angeordnet, wobei mittels dem dritten Horizontalpositionssensor erfass- und an die Bedien- und Steuereinheit meldbar ist, dass sich die Vorderseite des Tragrahmens bzw. Skids in einer vorgebbaren Position an der Ausgangsseite des Fertigungsabschnitts befindet, so daß das Horizontaltransportmittel des Fertigungsabschnitts mittels der Bedien- und Steuereinheit aus dem Langsambetrieb in einen Stillstandbetrieb umschaltbar ist.

Vorteilhaft weist die Horizontalpositionssensoreinrichtung einen vierten Horizontalpositionssensor auf, der an der Eingangsseite des Fertigungsabschnitts angeordnet und mittels dem erfass- und an die Bedien- und Steuereinheit meldbar ist, dass sich die Rückseite des Tragrahmens bzw. Skids in einer vorgebbaren Position an der Eingangsseite des Fertigungsabschnitts befindet, so dass das Horizontaltransportmittel des Fertigungsabschnitts mittels der Bedien- und Steuereinheit aus dem Langsambetrieb in den Stillstandbetrieb umschaltbar ist.

Die Horizontalpositionssensoren lassen sich zweckmäßigerweise als berührungslos arbeitende Sensoren (Beros) ausbilden.

Mittels der vorstehend geschilderten Anordnung der vier Horizontalpositionssensoren wird sichergestellt, dass sich der Tragrahmen bzw. Skid beim Abschalten des Horizontaltransportmittels bzw. der Rollenbahn in einer eindeutigen Position befindet.

Um den Vorgang der Feinpositionierung des Tragrahmens bzw. Skids überwachen und steuern zu können, ist der Bedien- und Steuereinheit vorteilhaft eine Feinpositionierungssensoreinrichtung zugeordnet, mittels der der Betriebszustand einer Feinpositionierungsvorrichtung, durch die ein Tragrahmen bzw. Skid an einem Fertigungsabschnitt der Fertigungsstraße exakt positionierbar ist, erfassbar ist.

Diese Feinpositionierungssensoreinrichtung hat vorteilhaft einen ersten Feinpositionierungssensor, der an einem Positionierelement der Feinpositionierungsvorrichtung, vorzugsweise einem Zentrierzylinder, angeordnet und mittels dem erfass- und an die Bedien- und Steuereinheit meldbar ist, wenn sich das Positionierelement in seiner vorgeschobenen Betriebsstellung befindet, in der der Tragrahmen bzw. Skid exakt am Fertigungsabschnitt positioniert ist.

Des Weiteren hat die Feinpositionierungssensoreinrichtung zweckmäßigerweise einen zweiten Feinpositionierungssensor, der am Positionierelement der Feinpositionierungsvorrichtung angeordnet und mittels dem erfass- und an die Bedien- und Steuereinheit meldbar ist, wenn sich das Positionierelement in seiner zurückgezogenen Ruhestellung befindet.

Die beiden Feinpositionierungssensoren lassen sich vorteilhaft als Grenztaster ausbilden.

Zur geregelten und kontrollierten Durchführung von vertikalen Transportvorgängen an einem Fertigungsabschnitt ist der Bedien- und Steuereinheit zweckmäßigerweise eine Vertikalpositionssensoreinrichtung zugeordnet, mittels der die Vertikalposition des Tragrahmens bzw. Skids am Fertigungsabschnitt erfassbar ist.

Diese Vertikalpositionssensoreinrichtung weist vorteilhaft einen ersten Vertikalpositionssensor auf, der am oberen Ende eines Bewegungspfades eines Signalgebers, der mit dem vom Vertikaltransport- und Hubmittel des Fertigungsabschnitts der Fertigungsstraße in Vertikalrichtung bewegten Tragrahmen bzw. Skid bewegbar ist, angeordnet und mittels dem erfass- und an die Bedien- und Steuereinheit meldbar ist, wenn sich der Tragrahmen bzw. Skid in seiner hohen oberen Stoppstellung befindet.

Vorteilhaft ist ein zweiter Vertikalpositionssensor vorgesehen, der nahe unter dem oberen Ende des Bewegungspfades des Signalgebers angeordnet und mittels dem erfass- und an die Bedien- und Steuereinheit meldbar ist, wenn sich der Tragrahmen bzw. Skid in seiner tiefen oberen Stoppstellung befindet.

Zur schnellstmöglichen und dennoch exakt kontrollierten Durchführung der Vertikalbewegungen des Tragrahmens bzw. Skids am Fertigungsabschnitt ist es vorteilhaft, wenn ein dritter Vertikalpositionssensor vorgesehen ist, der am unteren Ende des oberen Endabschnitts des Bewegungspfads des Signalgebers angeordnet und mittels dem erfass- und an die Bedien- und Steuereinheit meldbar ist, wenn sich der Tragrahmen bzw. Skid in seiner der Position des Signalgebers am unteren Ende des oberen Endabschnitts seines Bewegungspfads entsprechenden Vertikalposition befindet, in der das Vertikaltransport- und Hubmittel mittels der Bedien- und Steuereinheit zwischen Schnell- und Langsambetrieb umschaltbar ist.

Vorteilhaft ist ein vierter Vertikalpositionssensor vorgesehen, der in einem mittleren Abschnitt des Bewegungspfads des Signalgebers angeordnet und mittels dem erfass- und an die Bedien- und Steuereinheit meldbar ist, wenn sich der Tragrahmen bzw. Skid in einer Bauteilübergabe-Schleichfahrt bewegt.

Entsprechend dem dritten sollte zweckmäßigerweise ein fünfter Vertikalpositionssensor vorgesehen sein, der am oberen Ende des unteren Endabschnitts des Bewegungspfads des Signalgebers angeordnet und mittels dem erfass- und an die Bedien- und Steuereinheit meldbar ist, wenn sich der Tragrahmen bzw. Skid in seiner der Position des Signalgebers am oberen Ende des unteren Endabschnitts seines Bewegungspfads entsprechenden Vertikalposition befindet, in der das Vertikaltransport- und Hubmittel mittels der Bedien- und Steuereinheit zwischen Schnell- und Langsambetrieb umschaltbar ist.

Zweckmäßigerweise ist ein sechster Vertikalpositionssenor vorgesehen, der nahe über dem unteren Ende des Bewegungspfades des Signalgebers angeordnet und mittels dem erfaß- und an die Bedien- und Steuereinheit meldbar ist, wenn sich der Tragrahmen bzw. Skid in seiner hohen unteren Stoppstellung befindet.

Gemäß einer weiteren vorteilhaften Ausführungsform der erfindungsgemäßen Transport- und Positioniervorrichtung weist die Vertikalpositionssensoreinrichtung einen siebten Vertikalpositionssensor auf, der am unteren Ende des Bewegungspfads des Signalgebers angeordnet und mittels dem erfass- und an die Bedien- und Steuereinheit meldbar ist, wenn sich der Tragrahmen bzw. Skid in seiner tiefen unteren Stoppstellung befindet. Durch die vorstehend geschilderten sieben Vertikalpositionssensoren lässt sich die Vertikalbewegung bzw. der Hub des Tragrahmens bzw. Skids an einem Fertigungsabschnitt optimal steuern.

Die Vertikalpositionssensoren können vorteilhaft als berührungslos arbeitende Sensoren (Beros) ausgebildet sein, wobei insbesondere deren Ausgestaltung als Induktiv-Beros zweckmäßig sein kann.

Um eine weitere Sicherung gegen Fehlfunktionen und Fehlbetätigungen zu schaffen ist es vorteilhaft, wenn der Bedien- und Steuereinheit eine Teil- und Typkontrolleinrichtung zugeordnet ist, mittels der erfassbar ist, ob ein im Tragrahmen bzw. Skid fixiertes Teil bzw. dessen Typ einer vorgegebenen Projektspezifikation entsprechen.

Hierfür ist zweckmäßigerweise ein erster Teilkontrollsensor vorgesehen, der an einer ersten für das der vorgegebenen Projektspezifikation entsprechende Teil charakteristischen Stelle angeordnet und mittels dem erfass- und an die Bedien- und Steuereinheit meldbar ist, ob das im Tragrahmen bzw. Skid befindliche Teil an der ersten charakteristischen Stelle dem Teil gemäß der vorgegebenen Projektspezifikation entspricht.

Zur Erhöhung der Sicherheit kann analog ein zweiter Teilkontrollsensor vorgesehen sein, der an einer zweiten für das der vorgegebenen Projektspezifikation entsprechende Teil charakteristischen Stelle angeordnet und mittels dem erfass- und an die Bedien- und Steuereinheit meldbar ist, ob das im Tragrahmen bzw. Skid befindliche Teil an der zweiten charakteristischen Stelle dem Teil gemäß der vorgegebenen Projektspezifikation entspricht.

Die beiden Teilkontrollsensoren können als Nockenschalter ausgebildet sein.

Zur weiteren Verbesserung der Sicherheitsfunktion kann ein erster Typkontrollsensor vorgesehen sein, der an einer ersten für den der vorgegebenen Projektspezifikation entsprechenden Typ charakteristischen Stelle angeordnet und mittels dem erfass- und an die Bedien- und Steuereinheit meldbar ist, ob der Typ des im Tragrahmen bzw. Skid befindlichen Teils an der ersten charakteristischen Stelle dem Typ gemäß der vorgegebenen Projektspezifikation entspricht.

Analog kann zum weiteren Erhöhen der Sicherheit ein zweiter Typkontrollsensor vorgesehen sein, der an einer zweiten für den der vorgegebenen Projektspezifikation entsprechenden Typ charakteristischen Stelle angeordnet und mittels dem erfass- und an die Bedien- und Steuereinheit meldbar ist, ob der Typ des im Tragrahmen bzw. Skid befindlichen Teils an der zweiten charakteristischen Stelle dem Typ gemäß der vorgegebenen Projektspezifikation entspricht.

Die Typkontrollsensoren können zweckmäßigerweise als berührungslos arbeitende Sensoren (Beros) ausgebildet sein.

Zur Überwachung der Fixierung des Tragrahmens bzw. Skids am Fertigungsabschnitt sind der Bedien- und Steuereinheit vorteilhaft Spannzylindersensoreinrichtungen zugeordnet, mittels denen der Betriebszustand von den Tragrahmen bzw. Skids mit dem Fertigungsabschnitt verspannenden Spannzylindern erfassbar ist und die jeweils einen ersten Spannzylindersensor, mittels dem ein vorgeschobener Spannzustand des Spannzylinders erfass- und an die Bedien- und Steuereinheit meldbar ist, und einen zweiten Spannzylindersensor, mittels dem ein zurückgezogener Ruhezustand des Spannzylinders erfass- und an die Bedien- und Steuereinheit meldbar ist, aufweisen.

Die Spannzylindersensoren lassen sich vorteilhaft als Grenzschalter ausbilden.

Im Folgenden wird die Erfindung an Hand einer Ausführungsform unter Bezugnahme auf die Zeichnung näher erläutert. Es zeigen:
- FIG 1: einen Teil einer aus einer Mehrzahl von Fertigungsabschnitten bestehenden Fertigungsstraße mit einer erfindungsgemäß ausgebildeten Transport- und Positioniervorrichtung;
- FIG 2: eine Drauf- und eine Seitenansicht wesentlicher Bestandteile der erfindungsgemäßen Transport- und Positioniervorrichtung;
- FIG 3: eine Ablaufdarstellung von mittels der erfindungsgemäßen Transport- und Positioniervorrichtung an einem Fertigungsabschnitt gesteuerten Vorgängen; und
- FIG 4: eine Darstellung von mittels der erfindungsgemäßen Transport- und Positioniervorrichtung realisierbaren Schutzbereichen an einem Fertigungsabschnitt.

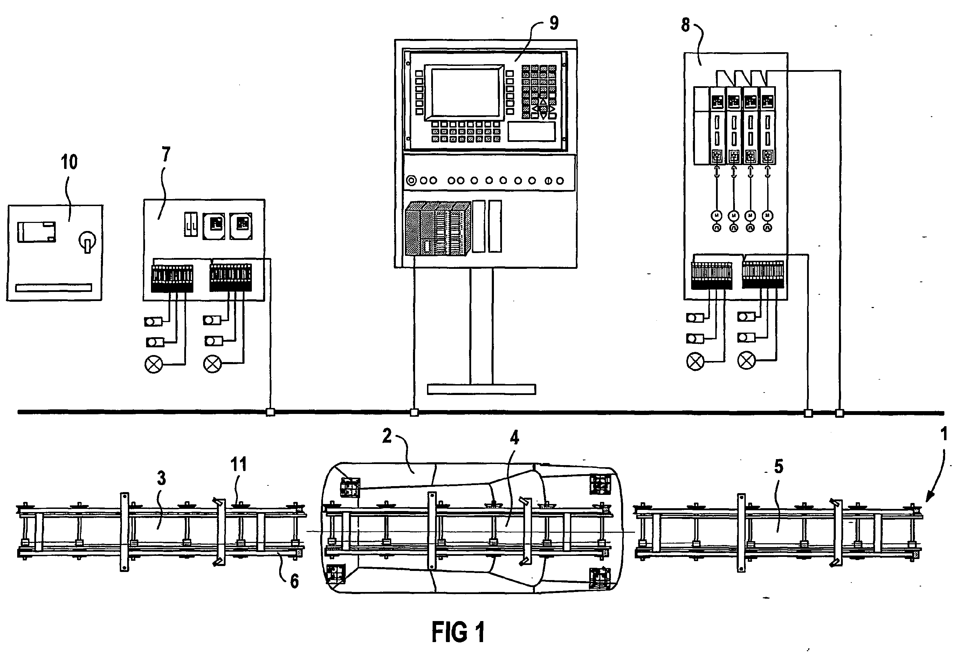

Eine in FIG 1 gezeigte Fertigungsstraße 1, z.B. für die Kraftfahrzeugmontage, besteht aus einer Vielzahl von in Transportrichtung von Teilen 2, hier Karosserieteilen von Kraftfahrzeugen, aufeinanderfolgenden Fertigungsabschnitten 3, 4, 5.

Hierzu ist das Karosserieteil 2 an einem Tragrahmen bzw. Skid 6 fixiert, mit welchem das Karosserieteil 2 in Transportrichtung der Fertigungsstraße 1 nacheinander die Fertigungsabschnitte 3, 4, 5 durchläuft. Die Fertigungsstraße 1 kann eine beliebige Anzahl derartiger Fertigungsabschnitte aufweisen. In FIG 1 sind drei Tragrahmen bzw. Skids 6, jedoch nur ein Karosserieteil 2 dargestellt, um die Übersichtlichkeit nicht zu beeinträchtigen.

Jedem Fertigungsabschnitt 3 bzw. 4 bzw. 5 ist eine Transport- und Positioniervorrichtung für Tragrahmen bzw. Skids 6 zugeordnet, die sich, wie aus FIG 1 hervorgeht, ihrerseits modulartig aus einer Transportantriebseinheit 7, einer Hubantriebseinheit 8, einer Bedien- und Steuereinheit 9 und einer Einspeisung 10 zusammensetzt.

Die modulartig ausgebildete Transportantriebseinheit 7 dient zum Antreiben eines dem jeweiligen Fertigungsabschnitt 3, 4, 5 zugehörigen Horizontaltransportmittels 11, welches im Falle des dargestellten Ausführungsbeispiels der Erfindung als Rollenbahn 11 ausgebildet ist.

Die ebenfalls modulartig ausgebildete Hubantriebseinheit 8 dient zum Antrieb eines Vertikaltransport- bzw. Hubmittels 12, von denen jeweils eines je Fertigungsabschnitt 3, 4, 5 der Fertigungsstraße 1 vorgesehen ist. Mittels dieses Vertikaltransport- bzw. Hubmittels 12 kann der Tragrahmen bzw. Skid 6, wenn er sich an einem Fertigungsabschnitt 3, 4, 5 befindet, in ein beliebiges Vertikalniveau verbracht werden, um am Karosserieteil 2 erforderliche Montage- oder Bearbeitungsvorgänge optimal vornehmen zu können.

Mittels der ebenfalls modulartig ausgebildeten Bedien- und Steuereinheit 9 werden bei der in FIG 1 gezeigten Ausführungsform der erfindungsgemäßen Transport- und Positioniervorrichtung die Transportantriebseinheit 7 und die Hubantriebseinheit 8 gesteuert.

Die Versorgung mit elektrischer Energie der Transportantriebseinheit 7, der Hubantriebseinheit 8 und der Bedien- und Steuereinheit 9 wird mittels der ebenfalls modulartig ausgebildeten Einspeisung 10 bewerkstelligt.

Bei der Transportantriebseinheit 7, der Hubantriebseinheit 8, der Bedien- und Steuereinheit 9 und der Einspeisung 10 handelt es sich jeweils um vorfertigbare Module, die jeweils für einen Fertigungsabschnitt 3, 4, 5 der Fertigungsstraße 1 vorgesehen sind. Diese vorfertigbaren Module 7, 8, 9 und 10 können probeweise in Betrieb genommen und getestet werden, bevor sie an den Betreiber der Fertigungsstraße 1 geliefert werden. Somit ist in jedem Fall sichergestellt, dass die erfindungsgemäße Transport- und Positioniervorrichtung praktisch unmittelbar nach ihrer Lieferung an den Kunden und ihrem Einbau an dem ihr zugeordneten Fertigungsabschnitt 3, 4, 5 der Fertigungsstraße 1 funktionsfähig ist.

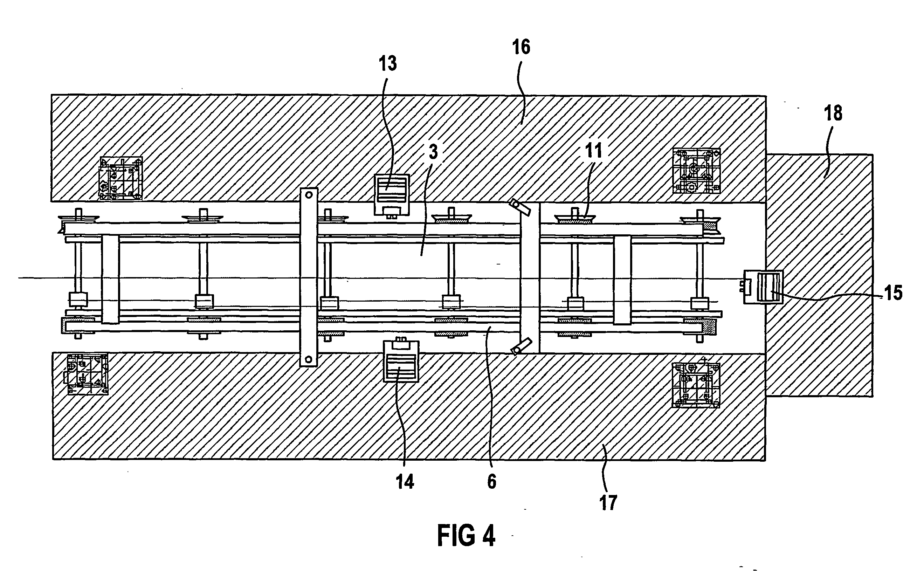

Der Bedien- und Steuereinheit 9, die einem in FIG 4 dargestellten Fertigungsabschnitt 3 zugeordnet ist, an dem am Karosserieteil 2 manuelle Arbeitsvorgänge vorgenommen werden müssen, kann, wie sich aus FIG 4 ergibt, an eine Sicherheitseinrichtung angeschlossen sein, mittels der über die Bedien- und Steuereinheit 9 die Transportantriebseinheit 7 und die Hubantriebseinheit 8 in jedem Moment außer Betrieb gesetzt werden können. Hierzu weist die an die Bedien- und Steuereinheit 9 angeschlossene Sicherheitseinrichtung bei dem in FIG 4 dargestellten Ausführungsbeispiel drei Sicherheitsscanner 13, 14, 15 auf. Die beiden Sicherheitsscanner 13 und 14 schaffen bzw. überwachen jeweils ein an einer von beiden Längsseiten des Fertigungsabschnitts 3 vorgesehenes Schutzfeld 16 bzw. 17. Der Sicherheitsscanner 15 schafft bzw. überwacht ein an der Vorderseite des Fertigungsabschnitts 3 angeordnetes Schutzfeld 18.

Die Sicherheitsscanner (PLC) 13, 14, 15 überwachen die ihnen zugeordneten Schutzfelder 16, 17, 18 und melden sofort an die Bedien- und Steuereinheit 9, wenn sich in den Schutzfeldern 16, 17, 18 eine Person befindet. Durch die Bedien- und Steuereinheit 9 werden bei einer solchen Verletzung eines der Schutzfelder 16, 17, 18 dann unmittelbar jedwede Transportvorgänge, die mittels der Transportantriebseinheit 7 oder der Hubantriebseinheit 8 durchgeführt werden, gestoppt. Die Wiederaufnahme eines unterbrochenen Transportvorgangs oder die Neueinleitung eines Transportvorgangs erfolgt erst nach Quittierung des Zustands, dass keines der Schutzfelder 16, 17, 18 verletzt ist.

Jedes der Schutzfelder 16, 17, 18 kann durch entsprechende Ver- bzw. Einstellung des ihm zugeordneten Sicherheitsscanners (PLC) 13, 14, bzw. 15 variabel gestaltet werden.

Zur Durchführung und zur Steuerung von Horizontalbewegungen des Tragrahmens bzw. Skids an dem ihr zugeordneten Fertigungsabschnitt 3, 4, 5 ist die jeweilige Bedien- und Steuereinheit 9 mit einer Horizontalpositionssensoreinrichtung versehen, mittels der die Horizontalposition des Tragrahmens bzw. Skids 6 am Fertigungsabschnitt 3, 4, 5 der Fertigungsstraße 1 erfasst wird.

Zu dieser Horizontalpositionssensoreinrichtung gehören im dargestellten Ausführungsbeispiel vier Horizontalpositionssensoren 19, 20, 21, 22.

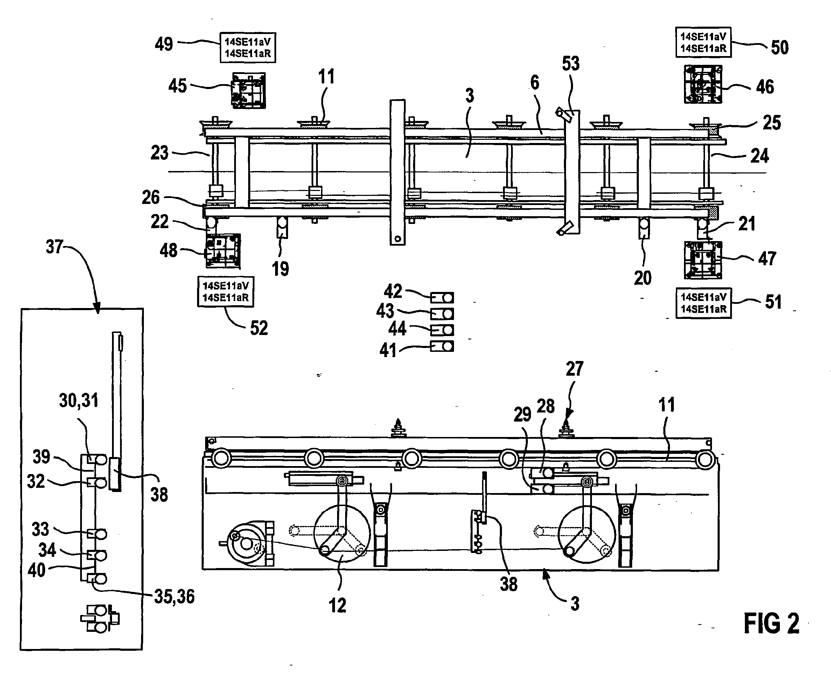

Der erste Horizontalpositionssensor (14SE1/1) 19 ist bei dem in FIG 2 näher gezeigten Ausführungsbeispiel leicht in Transportrichtung der Fertigungsstraße 1 versetzt nahe der Eingangsseite 23 des in FIG 2 gezeigten Fertigungsabschnitts 3 angeordnet. Wenn ein Tragrahmen bzw. Skid 6 in den in FIG 2 gezeigten Fertigungsabschnitt 3 transportiert wird, wird mittels des ersten Horizontalpositionssensors 19 dieser Tatbestand erfasst und an die Bedien- und Steuereinheit 9 weitergeleitet. In der Bedien- und Steuereinheit 9 wird nunmehr registriert, dass das Horizontaltransportmittel bzw. die Rollenbahn 11 des Fertigungsabschnitts 3 durch den einlaufenden Tragrahmen bzw. Skid 6 belegt ist.

Der zweite Horizontalpositionssensor (14SE1/2) 20 ist leicht versetzt vor der Ausgangsseite 24 des in FIG 2 dargestellten Fertigungsabschnitts 3 angeordnet. Wenn sich der Tragrahmen bzw. Skid 6 auf dem Horizontaltransportmittel bzw. der Rollenbahn 11 durch den Fertigungsabschnitt 3 bewegt, gerät irgendwann die Vorderseite 25 des Tragrahmens bzw. Skids 6 in den Bereich des zweiten Horizontalpositionssensors 20. Eine entsprechende Meldung wird durch den zweiten Horizontalpositionssensor 20 an die Bedien- und Steuereinheit 9 abgesetzt. In der Bedien- und Steuereinheit 9 liegt nunmehr die Information vor, dass sich die Vorderseite 25 des Tragrahmens bzw. Skids 6 der Ausgangsseite 24 des Fertigungsabschnitts 3 nähert, woraufhin die Bedien- und Steuereinheit 9 durch entsprechende Steuerungsmaßnahmen in der Transportantriebseinheit 7 das Horizontaltransportmittel bzw. die Rollenbahn 11 des Fertigungsabschnitts 3 aus einem Schnell- in einen Langsambetrieb umschaltet.

Der dritte Horizontalpositionssensor (14SE1/3) 21 ist an der Ausgangsseite 24 des Fertigungsabschnitts 3 angeordnet. Wenn die Vorderseite 25 des Tragrahmens bzw. Skids 6 eine aufgrund der entsprechenden Position des dritten Horizontalpositionssensors 21 vorgegebene Position an der Ausgangsseite 24 des Fertigungsabschnitts 3 erreicht, wird dieses durch den dritten Horizontalpositionssensor 21 erfasst und eine entsprechende Information an die Bedien- und Steuereinheit 9 weitergeleitet. Daraufhin wird mittels der Bedien- und Steuereinheit 9 das Horizontaltransportmittel bzw. die Rollenbahn 11 des Fertigungsabschnitts 3 aus dem Langsambetrieb in einen Stillstandbetrieb umgeschaltet, indem seitens der Bedien- und Steuereinheit 9 entsprechende Schaltvorgänge in der Transportantriebseinheit 7 vorgenommen werden.

Entsprechend ist der vierte Horizontalpositionssensor (14SE1/4) 22 an der Eingangsseite 23 des Fertigungsabschnitts 3 angeordnet. Mittels dieses vierten Horizontalpositionssensors 22 wird erfasst und an die Bedien- und Steuereinheit 9 gemeldet, wenn bzw. dass sich die Rückseite 26 des Tragrahmens bzw. Skids in einer vorgebbaren Position an der Eingangsseite 23 des Fertigungsabschnitts 3 befindet. Auch aufgrund dieser an die Bedien- und Steuereinheit 9 weitergeleiteten Information kann das Horizontaltransportmittel bzw. die Rollenbahn 11 des Fertigungsabschnitts 3 aufgrund entsprechender Eingriffe der Bedien- und Steuereinheit 9 in die Transportantriebseinheit 7 zwischen Langsam- und Stillstandbetrieb umgeschaltet werden.

Die Horizontalpositionssensoren 19, 20, 21, 22 sind als berührungslos arbeitende Sensoren (Beros), insbesondere als Sicherheitslaserscanner, ausgebildet.

Der in FIG 2 dargestellte Fertigungsabschnitt 3 der Fertigungsstraße 1 hat eine Feinpositionierungsvorrichtung, deren Positionierungselemente als Zentrierzylinder 27 ausgebildet sind. Der Bedien- und Steuereinheit 9 ist eine Feinpositionierungssensoreinrichtung zugeordnet, die den Betriebszustand der Zentrierzylinder 27 der Feinpositionierungsvorrichtung überwacht. Die Zentrierzylinder 27 dienen dazu, den Tragrahmen bzw. Skid exakt am Fertigungsabschnitt 3 zu positionieren.

Zur Überwachung der Zentrierzylinder 27 hat die Feinpositionierungssensoreinrichtung einen ersten Feinpositionierungssensor 28 und einen zweiten Feinpositionierungssensor 29.

Der erste Feinpositionierungssensor (14SE10V) ist oberhalb des zweiten Feinpositionierungssensors (14SE10R) 29 im Bereich des Zentrierzylinders 27 angeordnet.

Mittels des ersten Feinpositionierungssensors 28 wird erfasst und an die Bedien- und Steuereinheit 9 gemeldet, wenn sich der Zentrierzylinder 27 in seiner vorgeschobenen Betriebstellung befindet, in der er den Tragrahmen bzw. Skid 6 exakt am Fertigungsabschnitt 3 positioniert.

Mittels des zweiten Feinpositionierungssensors 28 wird erfasst und an die Bedien- und Steuereinheit 9 gemeldet, wenn sich der Zentrierzylinder 27 in seiner zurückgezogenen Ruhestellung befindet und entsprechend der Tragrahmen bzw. Skid noch nicht bzw. nicht mehr in seiner exakten Positionierung am Fertigungsabschnitt 3 ist. Die beiden Feinpositionierungssensoren 28, 29 sind im dargestellten Ausführungsbeispiel als Grenztaster ausgebildet; grundsätzlich können jedoch auch anders gestaltete Sensoren eingesetzt werden.

Zur Durchführung und zur Steuerung der mittels des Vertikaltransport- bzw. Hubmittels 12 durchzuführenden Vertikalbewegungen des Tragrahmens bzw. Skids 6 am Fertigungsabschnitt 3 ist der Bedien- und Steuereinheit 9 eine Vertikalpositionssensoreinrichtung zugeordnet. Mittels dieser Vertikalpositionssensoreinrichtung wird die Vertikalposition des Tragrahmens bzw. Skids 6 während der an einem Fertigungsabschnitt 3, 4, 5 stattfindenden Vertikaltransport- und Bearbeitungsvorgänge erfasst. Die Vertikalpositionssensoreinrichtung des Fertigungsabschnitts 3 ist in FIG 2, unterer Teil, in ihrer Positionierung am Fertigungsabschnitt 3 und, daneben, in ihren Einzelheiten dargestellt.

Zur Überwachung und Steuerung der Vertikalbewegung des mittels des Vertikaltransport- bzw. Hubmittels 12 bewegten Tragrahmens bzw. Skids 6 hat die der Bedien- und Steuereinheit 9 zugeordnete Vertikalpositionssensoreinrichtung 7 Vertikalpositionssensoren 30, 31, 32, 33, 34, 35, 36, deren Anordnung aus der vergrößerten Darstellung links neben der Seitenansicht des Fertigungsabschnitts 3 in FIG 2 hervorgeht. Diesbezüglich sei noch darauf hingewiesen, dass der erste Vertikalpositionssensor (14SE2V) 30 und der zweite Vertikalpositionssensor (14SE2RV3) 31 sowie der sechste Vertikalpositionssensor (14SE2VR2) 35 und der siebte Vertikalpositionssensor (14SE2R) 36 jeweils paarweise angeordnet sind, wobei die tatsächliche Anordnung der in der vergrößerten Darstellung in FIG 2 mit dem Pfeil 37 gekennzeichneten Anordnung entspricht.

Die sieben Vertikalpositionssensoren 30 bis 36 sind neben einem in Vertikalrichtung verlaufenden Bewegungspfad eines Signalgebers 38 angeordnet. Der Signalgeber 38 bewegt sich mit dem vom Vertikaltransport- und Hubmittel 12 des Fertigungsabschnitts 3 in Vertikalrichtung bewegten Tragrahmen bzw. Skid 6.

Der erste Vertikalpositionssensor 30 ist am oberen Ende des Bewegungspfades des Signalgebers 38 angeordnet. Mittels des ersten Vertikalpositionssensors 30 wird erfasst und an die Bedien- und Steuereinheit 9 gemeldet, wenn sich der Tragrahmen bzw. Skid 6 in seiner hohen oberen Stoppstellung befindet.

Der zweite Vertikalpositionssensor 31 ist nahe dem oberen Ende des Bewegungspfades des Signalgebers 38 angeordnet; er erfasst und meldet weiter an die Bedien- und Steuereinheit 9, wenn sich der Tragrahmen bzw. Skid 6 in seiner tiefen oberen Stoppstellung befindet.

Der dritte Vertikalpositionssensor (14SE2RV2) 32 ist nahe am unteren Ende des oberen Endabschnitts 39 des Bewegungspfads des Signalgebers 38 angeordnet. Er erfasst und meldet weiter an die Bedien- und Steuereinheit 9, wenn sich der Tragrahmen bzw. Skid 6 in seiner der Position des Signalgebers 38 am unteren Ende des oberen Endabschnitts 39 seines Bewegungspfads entsprechenden Vertikalposition befindet.

Je nach Bewegungsrichtung des Tragrahmens bzw. Skids 6 in Vertikalrichtung kann die Bedien- und Steuereinheit 9 durch entsprechende steuertechnische Eingriffe in die Hubantriebseinheit 8 das Vertikaltransport- und Hubmittel 12 zwischen Schnell- und Langsambetrieb umschalten.

Der vierte Vertikalpositionssensor (14SE2RV1) 33 ist in einem mittleren Abschnitt des Bewegungspfads des Signalgebers 38 angeordnet. Mittels dieses vierten Vertikalpositionssensors 33 wird erfasst und an die Bedien- und Steuereinheit 9 weitergemeldet, wenn sich der Tragrahmen bzw. Skid 6 in einer Bauteilübergabe-Schleichfahrt bewegt.

Der fünfte Vertikalpositionssensor (14SE2VR1) 34 ist am oberen Ende des unteren Endabschnitts 40 des Bewegungspfads des Signalgebers 38 angeordnet. Der fünfte Vertikalpositionssensor 34 erfasst und meldet an die Bedien- und Steuereinheit 9, wenn sich der Tragrahmen bzw. Skid 6 in seiner der Position des Signalgebers 38 am oberen Ende des unteren Endabschnitts 40 seines Bewegungspfads entsprechenden Vertikalposition befindet bzw. wenn er diese Position passiert. Je nach Bewegungsrichtung des Tragrahmens bzw. Skids 6 kann das Vertikaltransport- und Hubmittel 12 durch entsprechende Eingriffe der Bedien- und Steuereinheit 9 in die Hubantriebseinheit 8 zwischen Schnell- und Langsambetrieb umgeschaltet werden.

Der sechste Vertikalpositionssensor 35 ist nahe über dem unteren Ende des Bewegungspfads des Signalgebers 38 angeordnet und erfasst und meldet an die Bedien- und Steuereinheit 9, wenn sich der Tragrahmen bzw. Skid 6 in seiner hohen unteren Stoppstellung befindet.

Entsprechend ist der siebte Vertikalpositionssensor 36 am unteren Ende des Bewegungspfads des Signalgebers 38 angeordnet und erfasst und meldet an die Bedien- und Steuereinheit 9, wenn sich der Tragrahmen bzw. Skid 6 in seiner tiefen unteren Stoppstellung befindet.

Die beim dargestellten Ausführungsbeispiel der erfindungsgemäßen Transport- und Positioniervorrichtung sieben Vertikalpositionssensoren 30 bis 37 sind als berührungslos arbeitende Sensoren (Beros) ausgebildet, und zwar insbesondere als Induktiv-Beros.

Um automatisch feststellen zu können, ob das im Tragrahmen bzw. Skid 6 fixierte Karosserieteil 2 tatsächlich dasjenige ist, welches zu dem gesetzten Zeitpunkt am Fertigungsabschnitt 3, 4, 5 der Fertigungsstraße 1 zu bearbeiten ist, ist der Bedien- und Steuereinheit 9 eine Teil- und Typkontrolleinrichtung zugeordnet. Mittels dieser Teil- und Typkontrolleinrichtung wird erfasst, ob ein im Tragrahmen bzw. Skid fixiertes Karosserieteil 2 bzw. dessen Typ der jeweils vorgegebenen Projektspezifikation entsprechen.

Hierzu weist die Teil- und Typkontrolleinrichtung zwei Teilkontrollsensoren 41, 42 und zwei Typkontrollsensoren 43, 44 auf, die in FIG 2 lediglich prinzipiell dargestellt sind. Die Anordnung der Teil- und der Typkontrollsensoren 41 bis 44 wird in geeigneter Weise vorgenommen.

Der erste Teilkontrollsensor (14ST11/1) 41 ist so am Fertigungsabschnitt 3 angeordnet, dass er eine erste für das der vorgesehenen Projektspezifikation entsprechende Karosserieteil 2 charakteristische Stelle erfasst. Er ermittelt und meldet an die Bedien- und Steuereinheit 9, ob das im Tragrahmen bzw. Skid befindliche Karosserieteil 2 an dieser ersten charakteristischen Stelle dem Teil entspricht, wie es in der Projektspezifikation vorgegeben ist.

Der zweite Teilkontrollsensor (14ST11/2) 42 ist an einer zweiten für das der vorgegebenen Projektspezifikation entsprechende Karosserieteil 2 charakteristischen Stelle angeordnet. Mittels ihm wird erfasst und an die Bedien- und Steuereinheit 9 gemeldet, ob das im Tragrahmen bzw. Skid 6 befindliche Karosserieteil 2 an dieser zweiten charakteristischen Stelle dem Teil gemäß der vorgegebenen Projektspezifikation entspricht.

Der erste und der zweite Teilkontrollsensor 41, 42 können beispielsweise als Nockenschalter ausgebildet sein, wobei grundsätzlich jedoch jede geeignete Sensorausbildung möglich ist.

Der erste Typkontrollsensor (14ST12/1) 43 ist an einer ersten für den der vorgegebenen Projektspezifikation entsprechenden Typ charakteristischen Stelle angeordnet; er erfasst und meldet an die Bedien- und Steuereinheit 9, ob der Typ des im Tragrahmen bzw. Skid 6 befindlichen Karosserieteils 2 an dieser ersten für den Typ charakteristischen Stelle dem Typ gemäß der vorgegebenen Projektspezifikation entspricht.

Entsprechend ist der zweite Typkontrollsensor (14ST12/2) 44 an einer zweiten für den der vorgegebenen Projektspezifikation entsprechenden Typ charakteristischen Stelle angeordnet, und er erfasst und meldet an die Bedien- und Steuereinheit 9, ob der Typ des im Tragrahmen bzw. Skid 6 befindlichen Teils an dieser zweiten charakteristischen Stelle dem Typ gemäß der vorgegebenen Projektspezifikation entspricht.

Die beiden Typkontrollsensoren 43, 44 sind bei dem dargestellten Ausführungsbeispiel der erfindungsgemäßen Transport- und Positioniervorrichtung als berührungslos arbeitende Sensoren (Beros) ausgebildet.

Um den Tragrahmen bzw. Skid 6 in einer festen räumlichen Positionierung am Fertigungsabschnitt 3, 4, 5 zu fixieren, ist jeder Fertigungsabschnitt 3, 4, 5 mit Spannzylindern 45, 46, 47, 48 ausgerüstet, die etwa in den Eckbereichen des Fertigungsabschnitts 3, 4, 5 bzw. des Tragrahmens bzw. Skids 6 angeordnet sind. Der Bedien- und Steuereinheit 9 sind Spannzylindersensoreinrichtungen 49, 50, 51, 52 zugeordnet. Mittels dieser Spannzylindersensoreinrichtungen 49, 50, 51, 52 ist der Betriebszustand der den Tragrahmen bzw. Skid 6 mit dem Fertigungsabschnitt 3, 4, 5 verspannenden Spannzylinder 45, 46, 47, 48 erfassbar.

Zu jeder Spannzylindersensoreinrichtung 49, 50, 51, 52 gehört ein erster Spannzylindersensor, mittels dem ein vorgeschobener Spannzustand des Spannzylinders 45, 46, 47, 48 erfass- und an die Bedien- und Steuereinheit 9 meldbar ist, sowie ein zweiter Spannzylindersensor, mittels dem ein zurückgezogener Ruhezustand des Spannzylinders 45, 46, 47, 48 erfass- und an die Bedien- und Steuereinheit meldbar ist.

Die Spannzylindersensoren der Spannzylindersensoreinrichtungen 49, 50, 51, 52 können beispielsweise als Grenzschalter ausgebildet sein.

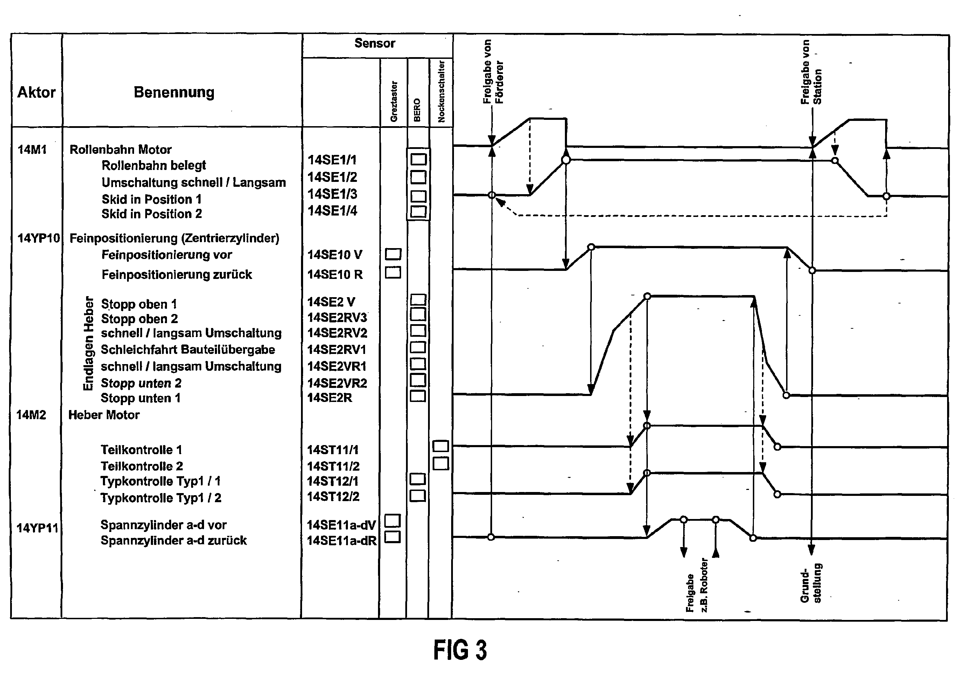

Wie sich insbesondere aus dem in FIG 3 im Einzelnen dargestellten Ablaufplan ergibt, wird das Horizontaltransportmittel bzw. die Rollenbahn 11 gestoppt, wenn die vier Horizontalpositionssensoren 19, 20, 21, 22 belegt sind. Nach dem Stoppen des Tragrahmens bzw. Skids 6 wird dieser durch die auf einen vorderen Querholm 53 des Tragrahmens bzw. Skids 6 wirkende Feinpositionierungsvorrichtung 27 feinpositioniert. Der Betriebszustand bzw. die Position der Feinpositionierungsvorrichtung 27 wird über die Feinpositionierungssensoren 28, 29 abgefragt.

Der Tragrahmen bzw. Skid 6 wird mittels des Vertikaltransport- bzw. Hubmittels 12 aus seiner oberen Lage über die vom dritten Vertikalpositionssensor 32 ausgelöste Schnell/Langsam-Umschaltung über die Bauteilübergabe-Schleichfahrt in seine untere Lage gefahren, wobei er am fünften Vertikalpositionssensor 34 vorbeiläuft, durch den ebenfalls eine Schnell/Langsam-Umschaltung ausgelöst wird.

Wenn mittels der beiden Teilkontrollsensoren 41, 42 und mittels der beiden Typkontrollsensoren 43, 44 ein positives Signal geliefert wird, werden die Spannzylinder 45, 46, 47, 48 in ihren Spannzustand verbracht. Danach wird der Fertigungsabschnitt 3, 4, 5 zur Bearbeitung freigegeben.

Der vorstehend geschilderte Ablauf setzt sich in umgekehrter Reihenfolge fort und wiederholt sich in der Taktzeit.

## Patentansprüche

1. Transport- und Positioniervorrichtung für Tragrahmen bzw. Skids (6), die Fertigungsabschnitte (3, 4, 5) einer Fertigungsstraße (1) durchlaufen, wobei die Transport- und Positioniervorrichtung modulartig für einen Fertigungsabschnitt (3, 4, 5) der Fertigungsstraße (1) ausgebildet ist, mit einer Transportantriebseinheit (7), mittels der ein Horizontaltransportmittel (11) des Fertigungsabschnitts (3, 4, 5) der Fertigungsstraße (1) antreibbar und die als Modul ausgebildet ist, und einer Hubantriebseinheit (8), mittels der ein Vertikaltransport- bzw. Hubmittel (12) des Fertigungsabschnitts (3, 4, 5) der Fertigungsstraße (1) antreibbar und die als Modulteil ausgebildet ist, **dadurch gekennzeichnet,**
**dass** die Transport- und Positioniervorrichtung eine Bedien- und Steuereinheit (9), mittels der die Transportantriebseinheit (7) und die Hubantriebseinheit (8) steuerbar sind und die als Modul ausgebildet ist, und eine Einspeisung (10) aufweist, mittels der die Transportantriebseinheit (7), die Hubantriebseinheit (8) und die Bedien- und Steuereinheit (9) mit elektrischer Energie versorgbar sind und die als Modulteil ausgebildet ist.

2. Transport- und Positioniervorrichtung nach Anspruch 1, bei der der Bedien- und Steuereinheit (9) eines für manuelle Tätigkeiten ausgerüsteten Fertigungsabschnitts (3,4,5) eine Sicherheitseinrichtung zugeordnet ist, mittels der die Transportantriebseinheit (7) und/oder die Hubantriebseinheit (8) außer Betrieb setzbar sind.

3. Transport- und Positioniervorrichtung nach Anspruch 2, bei der die Sicherheitseinrichtung Sicherheitsscanner (PLS) (13,14,15) aufweist, mittels denen in manuellen Arbeitsbereichen am bzw. neben dem Fertigungsabschnitt (3,4,5) jeweils ein Schutzfeld (16,17,18) schaff- bzw. überwachbar ist.

4. Transport- und Positioniervorrichtung nach Anspruch 3, bei der die mittels der Sicherheitsscanner (13,14,15) schaff- und überwachbaren Schutzfelder (16,17,18) variabel gestaltbar sind.

5. Transport- und Positioniervorrichtung nach einem der Ansprüche 1 bis 4, bei der der Bedien- und Steuereinheit (9) eine Horizontalpositionssensoreinrichtung zugeordnet ist, mittels der die Horizontalposition eines Tragrahmens bzw. Skids (6) an einem Fertigungsabschnitt (3,4,5) der Fertigungsstraße (1) erfassbar ist.

6. Transport- und Positioniervorrichtung nach Anspruch 5, mit einem ersten Horizontalpositionssensor (19), der nahe der Eingangsseite (23) des Fertigungsabschnitts (3) angeordnet und mittels dem erfass- und an die Bedien- und Steuereinheit (9) meldbar ist, dass das Horizontaltransportmittel (11), vorzugsweise eine Rollenbahn (11), des Fertigungsabschnitts (3) durch einen Tragrahmen bzw. Skid (6) belegt ist.

7. Transport- und Positioniervorrichtung nach Anspruch 5 oder 6, mit einem zweiten Horizontalpositionssensor (20), der nahe der Ausgangsseite (24) des Fertigungsabschnitts (3) angeordnet und mittels dem erfass- und an die Bedien- und Steuereinheit (9) meldbar ist, dass sich die Vorderseite (25) des Tragrahmens bzw. Skids (6) der Ausgangsseite (24) des Fertigungsabschnitts (3) nähert, so dass das Horizontaltransportmittel (11) des Fertigungsabschnitts (3) mittels der Bedien- und Steuereinheit (9) aus einem Schnell- in einen Langsambetrieb umschaltbar ist.

8. Transport- und Positioniervorrichtung nach einem der Ansprüche 5 bis 7, mit einem dritten Horizontalpositionssensor (21), der an der Ausgangsseite (24) des Fertigungsabschnitts (3) angeordnet und mittels dem erfass- und an die Bedien- und Steuereinheit (9) meldbar ist, dass sich die Vorderseite (25) des Tragrahmens bzw. Skids (6) in einer vorgebbaren Position an der Ausgangsseite (24) des Fertigungsabschnitts (3) befindet, so dass das Horizontaltransportmittels (11) des Fertigungsabschnitts (3) mittels der Bedien- und Steuereinheit (9) aus dem Langsambetrieb in einen Stillstandbetrieb umschaltbar ist.

9. Transport- und Positioniervorrichtung nach einem der Ansprüche 5 bis 8, mit einem vierten Horizontalpositionssensor (22), der an der Eingangsseite (23) des Fertigungsabschnitts (3) angeordnet und mittels dem erfass- und an die Bedien- und Steuereinheit (9) meldbar ist, dass sich die Rückseite (26) des Tragrahmens bzw. Skids (6) in einer vorgebbaren Position an der Eingangsseite (23) des Fertigungsabschnitts (3) befindet, so dass das Horizontaltransportmittel (11) des Fertigungsabschnitts (3) mittels der Bedien- und Steuereinheit (9) aus dem Langsambetrieb in den Stillstandbetrieb umschaltbar ist.

10. Transport- und Positioniervorrichtung nach einem der Ansprüche 5 bis 9, bei der die Horizontalpositionssensoren (19 bis 22) als berührungslos arbeitende Sensoren (Beros) ausgebildet sind.

11. Transport- und Positioniervorrichtung nach Anspruch 10, bei der die Horizontalpositionssensoren (19 bis 22) als Sicherheitslaserscanner ausgebildet sind.

12. Transport- und Positioniervorrichtung nach einem der Ansprüche 1 bis 11, bei der der Bedien- und Steuereinheit (9) eine Feinpositionierungssensoreinrichtung zugeordnet ist, mittels der der Betriebszustand einer Feinpositionierungsvorrichtung (27), durch die ein Tragrahmen bzw. Skid (6) an einem Fertigungsabschnitt (3) der Fertigungsstraße (1) exakt positionierbar ist, erfassbar ist.

13. Transport- und Positioniervorrichtung nach Anspruch 12, mit einem ersten Feinpositionierungssensor (28), der an einem Positionierelement (27) der Feinpositionierungsvorrichtung (27), vorzugsweise einem Zentrierzylinder (27), angeordnet und mittels dem erfass- und an die Bedien- und Steuereinheit (9) meldbar ist, wenn sich das Positionierelement (27) in seiner vorgeschobenen Betriebsstellung befindet, in der der Tragrahmen bzw. Skid (6) exakt am Fertigungsabschnitt (3) positioniert ist.

14. Transport- und Positioniervorrichtung nach Anspruch 12 oder 13, mit einem zweiten Feinpositionierungssensor (29), der am Positionierelement (27) der Feinpositionierungsvorrichtung (27) angeordnet und mittels dem erfass- und an die Bedien- und Steuereinheit (9) meldbar ist, wenn sich das Positionierelement (27) in seiner zurückgezogenen Ruhestellung befindet.

15. Transport- und Positioniervorrichtung nach einem der Ansprüche 12 bis 14, bei der die Feinpositionierungssensoren (28,29) als Grenztaster ausgebildet sind.

16. Transport- und Positioniervorrichtung nach einem der Ansprüche 1 bis 15, bei der der Bedien- und Steuereinheit (9) eine Vertikalpositionssensoreinrichtung zugeordnet ist, mittels der die Vertikalposition eines Tragrahmens bzw. Skids (6) an einem Fertigungsabschnitt (3) der Fertigungsstraße (1) erfassbar ist.

17. Transport- und Positioniervorrichtung nach Anspruch 16, mit einem ersten Vertikalpositionssensor (30), der am oberen Ende eines Bewegungspfades eines Signalgebers (38), der mit dem vom Vertikaltransport- und Hubmittel (12) des Fertigungsabschnitts (3) der Fertigungsstraße (1) in Vertikalrichtung bewegten Tragrahmen bzw. Skid (6) bewegbar ist, angeordnet und mittels dem erfass- und an die Bedien- und Steuereinheit (9) meldbar ist, wenn sich der Tragrahmen bzw. Skid (6) in seiner hohen oberen Stoppstellung befindet.

18. Transport- und Positioniervorrichtung nach Anspruch 16 oder 17, mit einem zweiten Vertikalpositionssensor (31), der nahe unter dem oberen Ende des Bewegungspfades des Signalgebers (38) angeordnet und mittels dem erfass- und an die Bedien- und Steuereinheit (9) meldbar ist, wenn sich der Tragrahmen bzw. Skid (6) in seiner tiefen oberen Stoppstellung befindet.

19. Transport- und Positioniervorrichtung nach einem der Ansprüche 16 bis 18, mit einem dritten Vertikalpositionssensor (32), der am unteren Ende des oberen Endabschnitts (39) des Bewegungspfads des Signalgebers (38) angeordnet und mittels dem erfass- und an die Bedien- und Steuereinheit (9) meldbar ist, wenn sich der Tragrahmen bzw. Skid (6) in seiner der Position des Signalgebers (38) am unteren Ende des oberen Endabschnitts (39) seines Bewegungspfads entsprechenden Vertikalposition befindet, in der das Vertikaltransport- und Hubmittel (12) mittels der Bedien- und Steuereinheit (9) zwischen Schnell- und Langsambetrieb umschaltbar ist.

20. Transport- und Positioniervorrichtung nach einem der Ansprüche 16 bis 19, mit einem vierten Vertikalpositionssensor (33), der in einem mittleren Abschnitt des Bewegungspfads des Signalgebers (38) angeordnet und mittels dem erfass- und an die Bedien- und Steuereinheit (9) meldbar ist, wenn sich der Tragrahmen bzw. Skid (6) in einer Bauteilübergabe-Schleichfahrt bewegt.

21. Transport- und Positioniervorrichtung nach einem der Ansprüche 16 bis 20, mit einem fünften Vertikalpositionssensor (34), der am oberen Ende des unteren Endabschnitts (40) des Bewegungspfads des Signalgebers (38) angeordnet und mittels dem erfass- und an die Bedien- und Steuereinheit (9) meldbar ist, wenn sich der Tragrahmen bzw. Skid (6) in seiner der Position des Signalgebers (38) am oberen Ende des unteren Endabschnitts (40) seines Bewegungspfads entsprechenden Vertikalposition befindet, in der das Vertikaltransport- und Hubmittel (12) mittels der Bedien- und Steuereinheit (9) zwischen Schnell- und Langsambetrieb umschaltbar ist.

22. Transport- und Positioniervorrichtung nach einem der Ansprüche 16 bis 21, mit einem sechsten Vertikalpositionssensor (35), der nahe über dem unteren Ende des Bewegungspfads des Signalgebers (38) angeordnet und mittels dem erfass- und an die Bedien- und Steuereinheit (9) meldbar ist, wenn sich der Tragrahmen bzw. Skid (6) in seiner hohen unteren Stoppstellung befindet.

23. Transport- und Positioniervorrichtung nach einem der Ansprüche 16 bis 22, mit einem siebten Vertikalpositionssensor (36), der am unteren Ende des Bewegungspfads des Signalgebers (38) angeordnet und mittels dem erfass- und an die Bedien- und Steuereinheit (9) meldbar ist, wenn sich der Tragrahmen bzw. Skid (6) in seiner tiefen unteren Stoppstellung befindet.

24. Transport- und Positioniervorrichtung nach einem der Ansprüche 16 bis 23, bei der die Vertikalpositionssensoren (30 bis 36) als berührungslos arbeitende Sensoren (Beros) ausgebildet sind.

25. Transport- und Positioniervorrichtung nach Anspruch 24, bei der die Vertikalpositionssensoren (30 bis 36) als Induktiv-Beros ausgebildet sind.

26. Transport- und Positioniervorrichtung nach einem der Ansprüche 1 bis 17, bei der der Bedien- und Steuereinheit (9) eine Teil- und Typkontrolleinrichtung zugeordnet ist, mittels der erfassbar ist, ob ein im Tragrahmen bzw. Skid (6) fixiertes Teil (2) bzw. dessen Typ einer vorgegebenen Projektspezifikation entsprechen.

27. Transport- und Positioniervorrichtung nach Anspruch 26, mit einem ersten Teilkontrollsensor (41), der an einer ersten für das der vorgesehenen Projektspezifikation entsprechende Teil (2) charakteristischen Stelle angeordnet und mittels dem erfass- und an die Bedien- und Steuereinheit (9) meldbar ist, ob das im Tragrahmen bzw. Skid (6) befindliche Teil (2) an der ersten charakteristischen Stelle dem Teil gemäß der vorgegebenen Projektspezifikation entspricht.

28. Transport- und Positioniervorrichtung nach Anspruch 26 oder 27, mit einem zweiten Teilkontrollsensor (42), der an einer zweiten für das der vorgegebenen Projektspezifikation entsprechende Teil (2) charakteristischen Stelle angeordnet und mittels dem erfass- und an die Bedien- und Steuereinheit (9) meldbar ist, ob das im Tragrahmen bzw. Skid (6) befindliche Teil (2) an der zweiten charakteristischen Stelle dem Teil gemäß der vorgegebenen Projektspezifikation entspricht.

29. Transport- und Positioniervorrichtung nach einem der Ansprüche 26 bis 28, bei der die Teilkontrollsensoren (41, 42) als Nockenschalter ausgebildet sind.

30. Transport- und Positioniervorrichtung nach einem der Ansprüche 26 bis 29, mit einem ersten Typkontrollsensor (43), der an einer ersten für den der vorgegebenen Projektspezifikation entsprechenden Typ charakteristischen Stelle angeordnet und mittels dem erfass- und an die Bedien- und Steuereinheit (9) meldbar ist, ob der Typ des im Tragrahmen bzw. Skid (6) befindlichen Teils (2) an der ersten charakteristischen Stelle dem Typ gemäß der vorgegebenen Projektspezifikation entspricht.

31. Transport- und Positioniervorrichtung nach einem der Ansprüche 26 bis 30, mit einem zweiten Typkontrollsensor (44), der an einer zweiten für den der vorgegebenen Projektspezifikation entsprechenden Typ charakteristischen Stelle angeordnet und mittels dem erfass- und an die Be- dien- und Steuereinheit (9) meldbar ist, ob der Typ des im Tragrahmen bzw. Skid (6) befindlichen Teils (2) an der zweiten charakteristischen Stelle dem Typ gemäß der vorgegebenen Projektspezifikation entspricht.

32. Transport- und Positioniervorrichtung nach einem der Ansprüche 26 bis 31, bei der die Typkontrollsensoren (43,44) als berührungslos arbeitende Sensoren (Beros) ausgebildet sind.

33. Transport- und Positioniervorrichtung nach einem der Ansprüche 1 bis 32, bei der der Bedien- und Steuereinheit (9) Spannzylindersensoreinrichtungen (49,50,51,52) zugeordnet sind, mittels denen der Betriebszustand von dem Tragrahmen bzw. Skid (6) mit dem Fertigungsabschnitt (3) verspannenden Spannzylindern (45,46,47,48) erfassbar ist, und die jeweils einen ersten Spannzylindersensor, mittels dem ein vorgeschobener Spannzustand des Spannzylinders (45,46,47,48) erfass- und an die Bedien- und Steuereinheit (9) meldbar ist, und einen zweiten Spannzylindersensor, mittels dem ein zurückgezogener Ruhezustand des Spannzylinders(45,46,47,48) erfass- und an die Bedien- und Steuereinheit meldbar ist, aufweisen.

34. Transport- und Positioniervorrichtung nach Anspruch 33, bei der die Spannzylindersensoren als Grenzschalter ausgebildet sind.

## Claims

1. Transport and positioning device for support frames or runners (6) which run through production cells (3, 4, 5) of a production line (1), the transport and positioning device being realised in a modular manner for a production cell (3, 4, 5) of the production line (1), with a transport drive unit (7), by means of which a horizontal transport means (11) of the production cell (3, 4, 5) of the production line (1) can be actuated and which is realised in the form of a module, and a lift drive unit (8), by means of which a vertical transport or lifting means (12) of the production cell (3, 4, 5) of the production line (1) can be actuated and which is realised in the form of a modular part, **characterised in that**
the transport and positioning device has an operation and control unit (9) by means of which the transport drive unit (7) and the lift drive unit (8) can be controlled, and which is realised in the form of a module, and a power supply (10) by means of which the transport drive unit (7), the lift drive unit (8) and the operation and control unit (9) can be supplied with electrical energy and which is realised in the form of a modular part.

2. Transport and positioning device according to claim 1 in which the operation and control unit (9) of a production cell (3, 4, 5) equipped for manual activities is assigned a safety facility by means of which the transport drive unit (7) and/or the lift drive unit (8) can be shut down.

3. Transport and positioning device according to claim 2 in which the safety facility has safety scanners (PLS) (13, 14, 15) by means of which a protective zone (16, 17, 18) can be created or monitored in each case in manual work areas at or next to the production cell (3, 4, 5).

4. Transport and positioning device according to claim 3 in which the protective zones (16, 17, 18) which can be created and monitored by means of the safety scanners (13, 14, 15) can be formed in a variable manner.

5. Transport and positioning device according to one of claims 1 to 4 in which the operation and control unit (9) is assigned a horizontal position sensor facility by means of which the horizontal position of a support frame or runner (6) at a production cell (3, 4, 5) of the production line (1) can be captured.

6. Transport and positioning device according to claim 5 with a first horizontal position sensor (19) which is arranged close to the input side (23) of the production cell (3) and by means of which it is possible to capture and indicate to the operation and control unit (9) the fact that the horizontal transport means (11), preferably a roller conveyor (11), of the production cell (3) is occupied by a support frame or runner (6).

7. Transport and positioning device according to claim 5 or 6 with a second horizontal position sensor (20) which is arranged close to the output side (24) of the production cell (3) and by means of which it is possible to capture and indicate to the operation and control unit (9) the fact that the front side (25) of the support frame or runner (6) is approaching the output side (24) of the production cell (3) so that the horizontal transport means (11) of the production cell (3) can be changed over from a fast to a slow running mode by means of the operation and control unit (9).

8. Transport and positioning device according to one of claims 5 to 7 with a third horizontal position sensor (21) which is arranged at the output side (24) of the production cell (3) and by means of which it is possible to capture and indicate to the operation and control unit (9) the fact that the front side (25) of the support frame or runner (6) is located in a predefinable position at the output side (24) of the production cell (3) so that the horizontal transport means (11) of the production cell (3) can be changed over from the slow running mode to a standstill mode by means of the operation and control unit (9).

9. Transport and positioning device according to one of claims 5 to 8 with a fourth horizontal position sensor (22) which is arranged at the input side (23) of the production cell (3) and by means of which it is possible to capture and indicate to the operation and control unit (9) the fact that the rear side (26) of the support frame or runner (6) is located in a predefinable position at the input side (23) of the production cell (3) so that the horizontal transport means (11) of the production cell (3) can be changed over from the slow running mode to the standstill mode by means of the operation and control unit (9).

10. Transport and positioning device according to one of claims 5 to 9 in which the horizontal position sensors (19 to 22) are realised in the form of non-contacting sensors.

11. Transport and positioning device according to claim 10 in which the horizontal position sensors (19 to 22) are realised in the form of safety laser scanners.

12. Transport and positioning device according to one of claims 1 to 11 in which the operation and control unit (9) is assigned a fine positioning sensor facility by means of which the operating status of a fine positioning device (27), by which a support frame or runner (6) can be positioned precisely at a production cell (3) of the production line (1), can be captured.

13. Transport and positioning device according to claim 12 with a first fine positioning sensor (28) which is arranged at a positioning element (27) of the fine positioning device (27), preferably a centring cylinder (27), and by means of which it is possible to capture and indicate to the operation and control unit (9) if the positioning element (27) is located in its advanced setting in which the support frame or runner (6) is positioned precisely at the production cell (3).

14. Transport and positioning device according to claim 12 or 13 with a second fine positioning sensor (29) which is arranged at the positioning element (27) of the fine positioning device (27) and by means of which it is possible to capture and indicate to the operation and control unit (9) if the positioning element (27) is located in its retracted rest setting.

15. Transport and positioning device according to one of claims 12 to 14 in which the fine positioning sensors (28, 29) are realised in the form of limit switches.

16. Transport and positioning device according to one of claims 1 to 15 in which the operation and control unit (9) is assigned a vertical position sensor facility by means of which the vertical position of a support frame or runner (6) at a production cell (3) of the production line (1) can be captured.

17. Transport and positioning device according to claim 16 with a first vertical position sensor (30) which is arranged at the upper end of a movement path of a signal transmitter (38), which can be moved with the support frame or runner (6) moved in the vertical direction by the vertical transport and lifting means (12) of the production cell (3) of the production line (1), and by means of which it is possible to capture and indicate to the operation and control unit (9) if the support frame or runner (6) is located in its high upper stop setting.

18. Transport and positioning device according to claim 16 or 17 with a second vertical position sensor (31) which is arranged close under the upper end of the movement path of the signal transmitter (38) and by means of which it is possible to capture and indicate to the operation and control unit (9) if the support frame or runner (6) is located in its low upper stop setting.

19. Transport and positioning device according to one of claims 16 to 18 with a third vertical position sensor (32) which is arranged at the lower end of the upper end section (39) of the movement path of the signal transmitter (38) and by means of which it is possible to capture and indicate to the operation and control unit (9) if the support frame or runner (6) is located in its vertical position corresponding to the position of the signal transmitter (38) at the lower end of the upper end section (39) of its movement path in which the vertical transport and lifting means (12) can be changed over between fast and slow running mode by means of the operation and control unit (9).

20. Transport and positioning device according to one of claims 16 to 19 with a fourth vertical position sensor (33) which is arranged in a middle section of the movement path of the signal transmitter (38) and by means of which it is possible to capture and indicate to the operation and control unit (9) if the support frame or runner (6) is moving in a component hand-over inching travel.

21. Transport and positioning device according to one of claims 16 to 20 with a fifth vertical position sensor (34) which is arranged at the upper end of the lower end section (40) of the movement path of the signal transmitter (38) and by means of which it is possible to capture and indicate to the operation and control unit (9) if the support frame or runner (6) is located in its vertical position corresponding to the position of the signal transmitter (38) at the upper end of the lower end section (40) of its movement path in which the vertical transport and lifting means (12) can be changed over between fast and slow running mode by means of the operation and control unit (9).

22. Transport and positioning device according to one of claims 16 to 21 with a sixth vertical position sensor (35) which is arranged close above the lower end of the movement path of the signal transmitter (38) and by means of which it is possible to capture and indicate to the operation and control unit (9) if the support frame or runner (6) is located in its high lower stop setting.

23. Transport and positioning device according to one of claims 16 to 22 with a seventh vertical position sensor (36) which is arranged at the lower end of the movement path of the signal transmitter (38) and by means of which it is possible to capture and indicate to the operation and control unit (9) if the support frame or runner (6) is located in its low lower stop setting.

24. Transport and positioning device according to one of claims 16 to 23 in which the vertical position sensors (30 to 36) are realised in the form of non-contacting sensors.

25. Transport and positioning device according to claim 24 in which the vertical position sensors (30 to 36) are realised in the form of inductive non-contacting sensors.

26. Transport and positioning device according to one of claims 1 to 17 in which the operation and control unit (9) is assigned a part and type monitoring facility by means of which it is possible to capture whether a part (2) fixed in the support frame or runner (6) or its type corresponds to a predefined project specification.

27. Transport and positioning device according to claim 26 with a first part monitoring sensor (41) which is arranged at a first characteristic location for the part (2) corresponding to the project specification provided and by means of which it is possible to capture and indicate to the operation and control unit (9) whether the part (2) located in the support frame or runner (6) at the first characteristic location corresponds to the part in accordance with the predefined project specification.

28. Transport and positioning device according to claim 26 or 27 with a second part monitoring sensor (42) which is arranged at a second characteristic location for the part (2) corresponding to the predefined project specification and by means of which it is possible to capture and indicate to the operation and control unit (9) whether the part (2) located in the support frame or runner (6) at the second characteristic location corresponds to the part in accordance with the predefined project specification.

29. Transport and positioning device according to one of claims 26 to 28 in which the part monitoring sensors (41, 42) are realised in the form of cam switches.

30. Transport and positioning device according to one of claims 26 to 29 with a first type monitoring sensor (43) which is arranged at a first characteristic location for the type corresponding to the predefined project specification and by means of which it is possible to capture and indicate to the operation and control unit (9) whether the type of the part (2) located in the support frame or runner (6) at the first characteristic location corresponds to the type in accordance with the predefined project specification.

31. Transport and positioning device according to one of claims 26 to 30 with a second type monitoring sensor (44) which is arranged at a second characteristic location for the type corresponding to the predefined project specification and by means of which it is possible to capture and indicate to the operation and control unit (9) whether the type of the part (2) located in the support frame or runner (6) at the second characteristic location corresponds to the type in accordance with the predefined project specification.

32. Transport and positioning device according to one of claims 26 to 31 in which the type monitoring sensors (43, 44) are realised in the form of non-contacting sensors.

33. Transport and positioning device according to one of claims 1 to 32 in which the operation and control unit (9) is assigned clamping cylinder sensor facilities (49, 50, 51, 52) by means of which the operating status of clamping cylinders (45, 46, 47, 48) clamping the support frame or runner (6) with the production cell (3) can be captured and which have a first clamping cylinder sensor, by means of which it is possible to capture and indicate to the operation and control unit (9) an advanced clamping status of the clamping cylinder (45, 46, 47, 48), and a second clamping cylinder sensor, by means of which it is possible to capture and indicate to the operation and control unit (9) a retracted resting status of the clamping cylinder (45, 46, 47, 48), in each case.

34. Transport and positioning device according to claim 33 in which the clamping cylinder sensors are realised in the form of limit switches.

## Revendications

1. Dispositif de transport et de positionnement pour des cadres porteurs ou des plateaux (6) qui parcourent des sections de fabrication (3, 4, 5) d'une chaîne de fabrication (1), le dispositif de transport et de positionnement étant modulaire pour une section de fabrication (3, 4, 5) de la chaîne de fabrication (1), comportant une unité entraîneuse de transport (7) dont la conception est modulaire et qui permet d'entraîner un moyen de transport horizontal (11) de la section de fabrication (3, 4, 5) de la chaîne de fabrication (1) et une unité entraîneuse de levage (8) dont la conception est modulaire et qui permet d'entraîner un moyen de transport vertical ou de levage (12) de la section de fabrication (3, 4, 5) de la chaîne de fabrication (1),
**caractérisé en ce que** le dispositif de transport et de positionnement comporte une unité de commande et de pilotage (9) dont la conception est modulaire et qui permet de commander l'unité entraîneuse de transport (7) et l'unité entraîneuse de levage (8) ainsi qu'une alimentation (10) dont la conception est modulaire et qui permet d'alimenter en énergie électrique l'unité entraîneuse de transport (7), l'unité entraîneuse de levage (8) et l'unité de commande et de pilotage (9).

2. Dispositif de transport et de positionnement selon la revendication 1, sur lequel un dispositif de sécurité est associé à l'unité de commande et de pilotage (9) d'une section de fabrication (3, 4, 5) équipée pour des activités manuelles et permet d'arrêter l'unité entraîneuse de transport (7) et/ou l'unité entraîneuse de levage (8).

3. Dispositif de transport et de positionnement selon la revendication 2, sur lequel le dispositif de sécurité comporte des scanneurs de sécurité (PLS) (13, 14, 15) qui permettent d'obtenir ou de surveiller respectivement un périmètre de protection (16, 17, 18) dans les zones de travail manuel sur la section de fabrication (3, 4, 5) ou à côté d'elle.

4. Dispositif de transport et de positionnement selon la revendication 3, sur lequel il est possible de configurer de différentes manières les périmètres de protection (16, 17, 18) que permettent d'obtenir ou de surveiller les scanneurs de sécurité (13, 14, 15).

5. Dispositif de transport et de positionnement selon l'une des revendications 1 à 4, sur lequel un dispositif détecteur de position horizontale est associé à l'unité de commande et de pilotage (9) et permet de détecter la position horizontale d'un cadre porteur ou d'un plateau (6) sur une section de fabrication (3, 4, 5) de la chaîne de fabrication (1).

6. Dispositif de transport et de positionnement selon la revendication 5, comportant un premier détecteur de position horizontale (19) qui se trouve à proximité du côté entrée (23) de la section de fabrication (3) et qui permet de détecter et d'annoncer à l'unité de commande et de pilotage (9) que le moyen de transport horizontal (11), de préférence un convoyeur à galets (11), de la section de fabrication (3) est occupé par un cadre porteur ou par un plateau (6).

7. Dispositif de transport et de positionnement selon la revendication 5 ou 6, comportant un deuxième détecteur de position horizontale (20) qui se trouve à proximité du côté sortie (24) de la section de fabrication (3) et qui permet de détecter et d'annoncer à l'unité de commande et de pilotage (9) que le côté avant (25) du cadre porteur ou du plateau (6) s'approche du côté sortie (24) de la section de fabrication (3), de sorte que le moyen de transport horizontal (11) de la section de fabrication (3) peut passer d'un mode rapide à un mode lent à l'aide de l'unité de commande et de pilotage (9).

8. Dispositif de transport et de positionnement selon l'une des revendications 5 à 7, comportant un troisième détecteur de position horizontale (21) qui se trouve sur le côté sortie (24) de la section de fabrication (3) et qui permet de détecter et d'annoncer à l'unité de commande et de pilotage (9) que le côté avant (25) du cadre porteur ou du plateau (6) se trouve à un emplacement prédéfinissable sur le côté sortie (24) de la section de fabrication (3), de sorte que le moyen de transport horizontal (11) de la section de fabrication (3) peut passer d'un mode lent à un mode d'arrêt à l'aide de l'unité de commande et de pilotage (9).

9. Dispositif de transport et de positionnement selon l'une des revendications 5 à 8, comportant un quatrième détecteur de position horizontale (22) qui se trouve sur le côté entrée (23) de la section de fabrication (3) et qui permet de détecter et d'annoncer à l'unité de commande et de pilotage (9) que le côté arrière (26) du cadre porteur ou du plateau (6) se trouve à un emplacement prédéfinissable sur le côté entrée (23) de la section de fabrication (3), de sorte que le moyen de transport horizontal (11) de la section de fabrication (3) peut passer d'un mode lent au mode d'arrêt à l'aide de l'unité de commande et de pilotage (9).

10. Dispositif de transport et de positionnement selon l'une des revendications 5 à 9, sur lequel les détecteurs de position horizontale (19 à 22) sont des capteurs qui fonctionnent sans contact (Beros).

11. Dispositif de transport et de positionnement selon la revendication 10, sur lequel les détecteurs de position horizontale (19 à 22) sont des scanneurs laser de sécurité.

12. Dispositif de transport et de positionnement selon l'une des revendications 1 à 11, sur lequel un dispositif détecteur de positionnement précis est associé à l'unité de commande et de pilotage (9) qui permet de détecter le mode de fonctionnement d'un dispositif de positionnement précis (27) lequel permet de positionner exactement un cadre porteur ou un plateau (6) sur une section de fabrication (3) de la chaîne de fabrication (1).

13. Dispositif de transport et de positionnement selon la revendication 12, comportant un premier détecteur de positionnement précis (28) qui se trouve sur un élément de positionnement (27) du dispositif de positionnement précis (27), de préférence un cylindre centreur (27), et qui permet de détecter et d'annoncer à l'unité de commande et de pilotage (9) le moment où l'élément de positionnement (27) est dans sa position avancée de fonctionnement où le cadre porteur ou le plateau (6) est exactement placé sur la section de fabrication (3).

14. Dispositif de transport et de positionnement selon la revendication 12 ou 13, comportant un deuxième détecteur de positionnement précis (29) qui se trouve sur l'élément de positionnement (27) du dispositif de positionnement précis (27) et qui permet de détecter et d'annoncer à l'unité de commande et de pilotage (9) le moment où l'élément de positionnement (27) est dans sa position arrière de repos.

15. Dispositif de transport et de positionnement selon l'une des revendications 12 à 14, sur lequel les détecteurs de positionnement précis (28, 29) sont des interrupteurs limiteurs.

16. Dispositif de transport et de positionnement selon l'une des revendications 1 à 15, sur lequel un dispositif détecteur de position verticale est associé à l'unité de commande et de pilotage (9) et permet de détecter la position verticale d'un cadre porteur ou d'un plateau (6) sur une section de fabrication (3) de la chaîne de fabrication (1).

17. Dispositif de transport et de positionnement selon la revendication 16, comportant un premier détecteur de position verticale (30) qui se trouve à l'extrémité supérieure d'une trajectoire d'un transmetteur de signal (38) - qui se déplace en même temps que le cadre porteur ou le plateau (6) mu en direction verticale grâce au moyen de transport vertical ou de levage (12) de la section de fabrication (3) de la chaîne de fabrication (1) - et qui permet de détecter et d'annoncer à l'unité de commande et de pilotage (9) le moment où le cadre porteur ou le plateau (6) est en position d'arrêt supérieure haute.

18. Dispositif de transport et de positionnement selon la revendication 16 ou 17, comportant un deuxième détecteur de position verticale (31) qui se trouve à proximité de l'extrémité supérieure de la trajectoire du transmetteur de signal (38) et qui permet de détecter et d'annoncer à l'unité de commande et de pilotage (9) le moment où le cadre porteur ou le plateau (6) est en position d'arrêt supérieure basse.

19. Dispositif de transport et de positionnement selon l'une des revendications 16 à 18, comportant un troisième détecteur de position verticale (32) qui se trouve à l'extrémité inférieure de la portion terminale (39) supérieure de la trajectoire du transmetteur de signal (38) et qui permet de détecter et d'annoncer à l'unité de commande et de pilotage (9) le moment où le cadre porteur ou le plateau (6) est en position verticale qui correspond à la position du transmetteur de signal (38) à l'extrémité inférieure de la portion terminale (39) supérieure de sa trajectoire et où le moyen de transport vertical et de levage (12) peut passer du mode rapide au mode lent à l'aide de l'unité de commande et de pilotage (9).

20. Dispositif de transport et de positionnement selon l'une des revendications 16 à 19, comportant un quatrième détecteur de position verticale (33) qui se trouve dans une portion centrale de la trajectoire d'un transmetteur de signal (38) et qui permet de détecter et d'annoncer à l'unité de commande et de pilotage (9) le moment où le cadre porteur ou le plateau (6) fait un mouvement lent pour transmettre les composants.

21. Dispositif de transport et de positionnement selon l'une des revendications 16 à 20, comportant un cinquième détecteur de position verticale (34) qui se trouve à l'extrémité supérieure de la portion terminale (40) inférieure de la trajectoire d'un transmetteur de signal (38) et qui permet de détecter et d'annoncer à l'unité de commande et de pilotage (9) le moment où le cadre porteur ou le plateau (6) se trouve en position verticale qui correspond à la position du transmetteur de signal (38) à l'extrémité supérieure de la portion terminale (40) inférieure de sa trajectoire et où le moyen de transport vertical et de levage (12) peut passer du mode rapide au mode lent à l'aide de l'unité de commande et de pilotage (9).

22. Dispositif de transport et de positionnement selon l'une des revendications 16 à 21, comportant un sixième détecteur de position verticale (35) qui est proche du dessus de l'extrémité inférieure de la trajectoire du transmetteur de signal (38) et qui permet de détecter et d'annoncer à l'unité de commande et de pilotage (9) le moment où le cadre porteur ou le plateau (6) est en position d'arrêt inférieure haute.

23. Dispositif de transport et de positionnement selon l'une des revendications 16 à 22, comportant un septième détecteur de position verticale (36) qui se trouve à l'extrémité inférieure de la trajectoire du transmetteur de signal (38) et qui permet de détecter et d'annoncer à l'unité de commande et de pilotage (9) le moment où le cadre porteur ou le plateau (6) est en position d'arrêt inférieure basse.

24. Dispositif de transport et de positionnement selon l'une des revendications 16 à 23, sur lequel les détecteurs de position verticale (30 à 36) sont des capteurs qui fonctionnent sans contact (Beros).

25. Dispositif de transport et de positionnement selon la revendication 24, sur lequel les détecteurs de position verticale (30 à 36) sont des Beros inductifs.

26. Dispositif de transport et de positionnement selon l'une des revendications 1 à 17, sur lequel un dispositif contrôleur de pièce et de type est associé à l'unité de commande et de pilotage (9) et permet de détecter si une pièce (2) fixée dans le cadre porteur ou dans le plateau (6) ou son type correspond à une spécification prédéfinie de projet.

27. Dispositif de transport et de positionnement selon la revendication 26, comportant un premier détecteur de contrôle des pièces (41) qui se trouve à un premier endroit caractéristique pour la pièce (2) d'après la spécification prévue de projet et qui permet de détecter et d'annoncer à l'unité de commande et de pilotage (9) si la pièce (2) qui est dans le cadre porteur ou dans le plateau (6) au premier endroit caractéristique correspond à la pièce d'après la spécification prédéfinie de projet.

28. Dispositif de transport et de positionnement selon la revendication 26 ou 27, comportant un deuxième détecteur de contrôle des pièces (42) qui se trouve à un deuxième endroit caractéristique pour la pièce (2) d'après la spécification prévue de projet et qui permet de détecter et d'annoncer à l'unité de commande et de pilotage (9) si la pièce (2) qui est dans le cadre porteur ou dans le plateau (6) au deuxième endroit caractéristique correspond à la pièce d'après la spécification prédéfinie de projet.

29. Dispositif de transport et de positionnement selon l'une des revendications 26 à 28, sur lequel les détecteurs de contrôle des pièces (41, 42) sont des contrôleurs à cames.

30. Dispositif de transport et de positionnement selon l'une des revendications 26 à 29, comportant un premier détecteur de contrôle de type (43) qui se trouve à un premier endroit caractéristique pour le type d'après la spécification prévue de projet et qui permet de détecter et d'annoncer à l'unité de commande et de pilotage (9) si le type de la pièce (2) qui est dans le cadre porteur ou dans le plateau (6) au premier endroit caractéristique correspond au type d'après la spécification prédéfinie de projet.

31. Dispositif de transport et de positionnement selon l'une des revendications 26 à 30, comportant un deuxième détecteur de contrôle de type (44) qui se trouve à un deuxième endroit caractéristique pour le type d'après la spécification prévue de projet et qui permet de détecter et d'annoncer à l'unité de commande et de pilotage (9) si le type de la pièce (2) qui est dans le cadre porteur ou dans le plateau (6) au deuxième endroit caractéristique correspond au type d'après la spécification prédéfinie de projet.

32. Dispositif de transport et de positionnement selon l'une des revendications 26 à 31, sur lequel les détecteurs de contrôle de type (43, 44) sont des capteurs qui fonctionnent sans contact (Beros).

33. Dispositif de transport et de positionnement selon l'une des revendications 1 à 32, sur lequel des dispositifs détecteurs de cylindres de tension (49, 50, 51, 52) sont associés à l'unité de commande et de pilotage (9), permettent de détecter le mode de fonctionnement des cylindres de tension (45, 46, 47, 48) qui tendent le cadre porteur ou le plateau (6) sur la section de fabrication (3) et comportent respectivement un premier détecteur de cylindre de tension qui permet de détecter et d'annoncer à l'unité de commande et de pilotage (9) que le cylindre de tension (45, 46, 47, 48) est en état avancé de tension et un deuxième détecteur de cylindre de tension qui permet de détecter et d'annoncer à l'unité de commande et de pilotage (9) que le cylindre de tension (45, 46, 47, 48) est en état arrière de repos.

34. Dispositif de transport et de positionnement selon la revendication 33, sur lequel les détecteurs de cylindre de tension sont des interrupteurs limiteurs.
